# EUROPEAN PATENT APPLICATION

(11) **EP 1 195 719 A2**
(43) Date of publication of application: **10.04.2002**
(21) Application number: 01122197.5
(22) Date of filing: 17.09.2001
(51) Int. Cl.: G06T 15/00

(54) **Rendering memory in a volume rendering system**

(30) Priority: 04.10.2000 US 679247
(71) Applicant: TeraRecon, Inc., San Mateo, California 94403 (US)
(72) Inventor: Lauer, Hugh C., Concord, Massachusetts 01742 (US); Knittel, James M., Groton, Massachusetts 01450 (US); Correll, Kenneth W., Lancaster, Massachusetts 01523 (US)
(74) Representative: Pfenning, Meinig & Partner GbR

(57) **Abstract**

A system for rendering a volume data set includes multiple parallel rendering pipelines coupled to a rendering memory. The rendering memory stores one-, two-, and three-dimensional arrays, each array having multiple elements. A set of registers for each array stores an array description that includes a base address of the array, a number of dimensions of the array, a size of each element of the array, a number of the elements in each dimension of the array, offset/modulus values of the array, a wrap value, and range values. A memory interface, coupled between the rendering memory and the plurality of rendering pipelines, accesses the elements of each array according to the corresponding array description.

## Description

### Field of the Invention

The present invention relates generally to the field of computer graphics, and more particularly to accessing and rendering volumetric data sets stored in a rendering memory of a parallel pipelined rendering system.

### Background of the Invention

Volume rendering is often used in computer graphics applications where three-dimensional data need to be visualized. The volume data can be scans of physical or medical objects, or atmospheric, geophysical, or other scientific models where visualization of the data facilitates an understanding of the underlying real-world structures represented by the data.

With volume rendering, the internal structure, as well as the external surface features of physical objects and models, are visualized. Voxels are usually the fundamental data items used in volume rendering. A voxel is data that represents values at a particular three-dimensional portion of the object or model. The *x*, *y*, and *z* coordinates of each voxel map the voxels to positions within the represented object or model.

A voxel represents one or more values related to a particular location in the object or model. For a given prior art volume, the values contained in a voxel can be a specific one of a number of different parameters, such as density, tissue type, elasticity, or velocity. During rendering, the voxel values are converted to color and opacity (RGBα) values in a process called classification. These RGBα values can be blended and then projected onto a two-dimensional image plane for viewing.

One frequently used technique during rendering is ray-casting. There, a set of imaginary rays are cast through a three-dimensional array of voxels. The rays originate from some view point or image plane. The voxel values are interpolated to determine sample values at points along the rays, and various techniques are known to convert the sampled values to pixel values. In either case, processing of the volume may proceed in a back-to-front, or front-to-back.

One traditional technique of ray-casting for volume rendering is based on a shear-warp algorithm of Lecroute and Levoy, see Lacroute and Levoy, *"Fast Volume Rendering Using a Shear-Warp Factorization of the Viewing Transformation,"* Computer Graphics, 28(4), 451-458, Aug. 1994. That technique has the advantage of stepping through a volume data set in an order closely related to the order in which the voxels are stored.

This order is called "object order," and it allows volume memory to be accessed in an optimal way. As a result, volume data can be fetched and processed at a maximum rate allowed by modern semiconductor memories. It was this ray casting technique that first made real-time, interactive volume rendering possible.

The shear-warp technique achieves its performance by casting rays according to a grid defined by the voxels on a "base plane" of the volume data set. The base plane is a plane parallel to a face or surface of the volume nearest and most nearly parallel to the image plane. In the shear-warp technique, rays cast through the volume are positioned on a grid of rows and columns parallel to the rows and columns of voxels in the volume itself. This orderly row-and-column arrangement is what makes object order rendering efficient.

However, the resulting image is aligned to the base plane, and not to the image plane. Moreover, except in special cases, the resulting base plane aligned image is distorted from the desired, final image of the volume object. Therefore, the shear-warp technique is really a two-stage technique. The first stage, called the "shear" stage," renders the image to the base plane, while the second stage, called the "warp" stage, undistorts the base plane image and positions it correctly onto the image plane.

The warp stage is not difficult, and it can easily be accomplished using, for example, the texture map functions of a conventional 3D polygon graphics system such as OpenGL™. However, not all application environments are designed for systems that include such graphics capability. In those cases, the need to perform the warp stage requires a cumbersome addition to the system design or an extra software module with challenging performance requirements. Either way, complexity of the system is increased.

An alternate method of ray-casting is known as "image order." In this method, rays are cast through the volume data set from pixels on final image plane. This produces a correct image directly, without distortion and without the warp stage. The resulting image is typically of a higher quality than can be obtained from the shear-warp technique expending an equivalent amount of computations. The reason that image order rendering produces higher image quality is that each pixel on the final image plane is generated directly from the single ray that passes through it. In object order, by contrast, each pixel in the final image plane is synthesized from a number of nearby pixels on the base plane image.

However, image order rendering comes with a penalty. Volume data cannot be fetched as efficiently from memory as with the shear-warp technique, and requires more operations to process. Therefore, image order methods are typically slower than object order techniques, so much so, that the real-time interactive volume rendering is only possible for the smallest volume data sets. Practical interactive applications, such as medical imaging, are very difficult, if not impossible, with prior art image order techniques.

In any hardware implemented volume rendering system, memory organization and memory bandwidth is a critical factor. For example, users would like to render volumes with 512x512x512 32-bit voxels onto 1024x1024 images in real-time. This means reading almost 500 Megabytes of voxel data and writing over 12 Megabytes of pixel data for each frame. Depth values and embedded polygon objects can require an additional 12 Megabytes per frame. In cases where the volume data set is larger, it may be necessary to process multiple portions of the volume in parallel. Moving such large amounts of data requires solutions that are not found in software based rendering systems.

### Summary of the Invention

The invention provides a system for rendering a volume data set. The system includes multiple parallel rendering pipelines coupled to a rendering memory. The rendering memory stores one-, two-, and three-dimensional arrays, each array having multiple elements. A set of registers for each array stores an array description that includes a base address of the array, a number of dimensions of the array, a size of each element of the array, a number of the elements in each dimension of the array, offset/modulus values of the array, a wrap value, and range values. A memory interface, coupled between the rendering memory and the plurality of rendering pipelines, accesses the elements of each array according to the corresponding array description.

### Brief Description of the Drawings

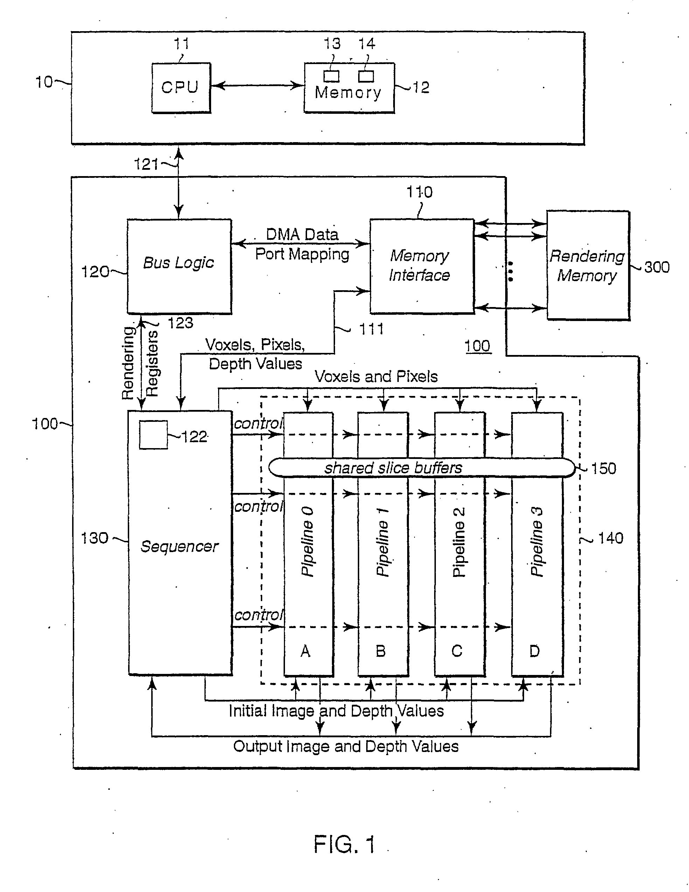

Figure 1 is a block diagram of a rendering system using a memory organization according to the invention;
Figure 2 is a block diagram of four parallel pipelines and miniblocks used with the system of Figure 1;
Figure 3 is a block diagram of basic data structures stored in a rendering memory of the system of Figure 1;
Figure 4 is a block diagram of data values used to specify an array stored in the rendering memory;
Figure 5a is a block diagram of a two-dimensional array;
Figure 5b is a block diagram of a three-dimensional array;
Figure 6 is a block diagram of array offsets;
Figure 7 is a block diagram of a wrapped array; and
Figure 8 is a block diagram of array ranges.

### Detailed Description of the Preferred Embodiment

### Rendering System Organization

As an advantage, the rendering subsystem 100 is fabricated as a single ASIC. The ASIC is installed on a board that forms the subsystem. The board can be connected to the host 10 via the bus 121. The board also includes a rendering memory 300 described in greater detail below.

The principal modules of the rendering subsystem 100 are a memory interface 110, bus logic 120, a sequencer 130, and four parallel hardware pipelines 140. Except for shared slice buffers 150, which span all four pipelines, the pipelines (A,B, C, and D) operate independently of each other. The pipelines form the core of the rendering engine.

### Memory Interface

The memory interface 110 controls eight double data rate (DDR) synchronous DRAM channels that comprise the rendering memory 300. The rendering memory 300 provides unified storage for all data 111 needed for rendering volumes, i.e., voxels, input and output images, depth values, lookup tables, and command queues. The memory interface 110 implements all memory accesses to memory 300, arbitrates the requests of the bus logic 120 and the sequencer 130, and distributes array data across the modules and memory 300 for high bandwidth access and operation. Data structures of the rendering memory 300, called arrays, are described in greater detail below.

### Bus Logic

The bus logic 120 provides an interface with the host computer system 10. If the host 10 is a personel computer (PC) or workstation, then the bus 121 can be a 64-bit, 66 MHz PCI bus 121 conforming to version 2.2 of the PCI specification. The bus logic also controls direct memory access (DMA) operation for transfering data to and from host system memory 12 via bus 121. The DMA operations are burst-mode data transfers.

The bus logic 120 also provides access to internal registers 122 of the sequencer via a register bus 123. These accesses are direct reads and/or writes of individual registers, initiated by the host computer or by some other device on the PCI bus. The bus logic 120 also interprets rendering commands for efficient control of rendering operations. The bus logic also sends register values directly to the sequencer 130 for controlling rendering operations and receives status information back from the sequencer 130.

### Sequencer

The sequencer 130 controls the volume rendering engine. It determines what data to fetch from the memory, dispatches that data to the four pipelines 140, sends control information such as interpolation weights to the individual pipelines at the right time, and receives output data from rendering operations, e.g. pixels. The sequencer itself is a finite state machine controlled by a large number of registers. These are typically written by the bus logic 120 in response to load register commands. Internally, the sequencer maintains the counters needed to step through sample space one section at a time, to convert sample coordinates to voxel coordinates, and to generate the control information needed by the stages of the four pipelines.

### Pipelines and Miniblocks

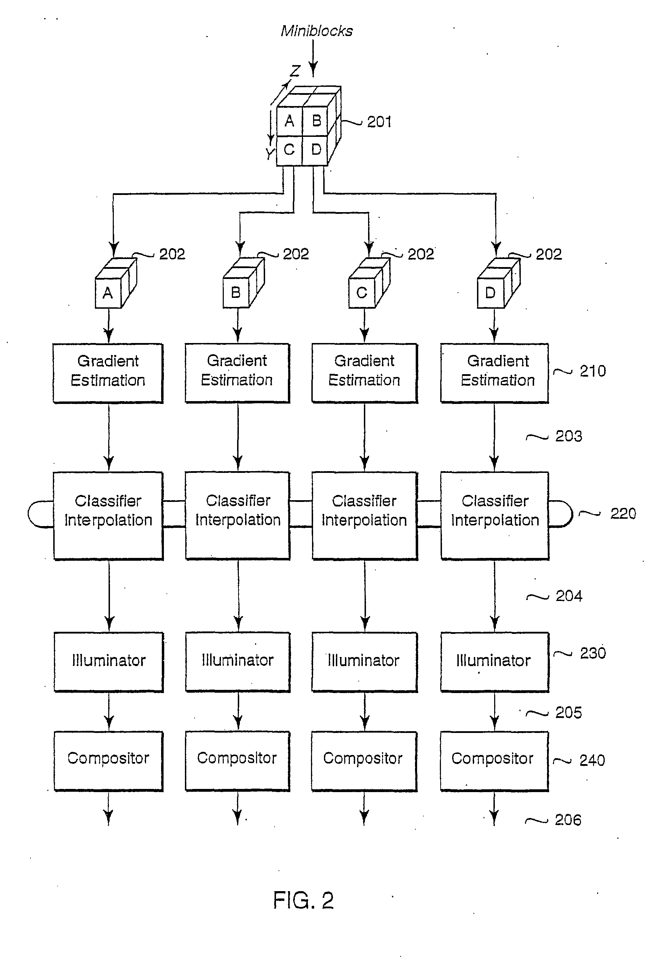

Figure 2 shows the four rendering pipelines in greater detail, and it also shows how data and rendering operations are distributed among the piplines. Each pipeline includes a gradient estimation stage 210, a classifier-interpolator stage 220, an illuminator stage, 230, and a compositer stage 240. Voxels are stored in the memory 300 as miniblocks 201, that is, small cubic arrays of *2×2×2* voxels each. During rendering, the sequencer 130 causes the memory interface to read streams of miniblocks. These are presented to the pipelines at the rate of one miniblock per clock cycle.

Miniblocks are read from the volume data set in *x*-*y*-*z*-order. That is, they are read sequentially in the *x*-direction to fill up a row of a section, and row-by-row in the *y*-direction to fill a slice, and slice-by-slice in the *z*-direction to render the entire section.

As each miniblock arrives via the memory interface 110, it is permuted according to the selected view direction. The miniblock is then decomposed into four *1×1×2* arrays of voxels 202, that is, four pairs of voxels aligned in the *z*-direction. One pair is forwarded to each pipeline as shown in Figure 2.

Each pair of voxels is passed through the gradient estimation stage to obtain gradient values at each voxel. As a result of the central difference operator used to obtain gradients, the output voxels and gradients are offset by one unit in each dimension from the inputs. This requires a small amount of data exchange between pipelines.

From the gradient estimation stage, the voxels and gradients 203 are passed to the classifier-interpolator 220. In this stage, voxel fields are converted to RGBα values and, along with gradients, are interpolated to values at sample points along rays. As stated above, sample slices are parallel to voxel slices. The classification and interpolation steps can occur in either order. Note that the classifier-interpolator has one pair of slice buffers 150 that are shared among all four pipelines.

The output 204 of the four classifier-interpolators of the four pipelines is an array of RGBα values and gradients at a *2×2* array of points in sample space. The points always lie in the same slice (plane) of sample space but will be aligned with the rays. When rays pass through pixels on the image plane, we render in *xy-image order,* because the *x*- and *y*-coordinates of each sample are the same as those of image space, though the *z*-coordinates of each sample are not the same as those of image space.

The RGBα values and gradients are next passed to the four illuminators 230. These apply well known Phong shading using reflectance maps. The illuminator of each pipeline is independent of those of the other pipelines, in the sense that they do not exchange data during rendering. Naturally, they all operate synchronously according to the same clock.

The gradients are consumed in the illuminator stages except when the rendering operation specifies the output of gradients. In the later case, the three gradient components are substituted for the red, green, and blue color components in the pipelines.

The output 205 of the illuminator stage of each pipeline is an illuminated RGBα value representing the color contribution of its sample point. This is passed to the compositor stage 240. The compositor combines the RGBα values of the rays into pixels. At the end of rendering a section, the output 206 of the four compositor stages is written to the rendering memory 300.

### Rendering Memory Data Structures

The rendering memory 300 stores volume data sets, image and depth buffers, command queues, lookup tables, and all other information needed to operate the rendering system. The memory 300 is designed to support very fast data transfers, e.g., 6.4 Gigabytes per second aggregate bandwidth. As in prior art hardware rendering pipelines, latency is less important than bandwidth in the design of the memory subsystem.

In order to achieve this level of performance, the system organizes arrays of data so that small groups of adjacent array elements are stored in blocks or chunks that can be fetched in bursts, and the blocks or chunks are distributed across memory modules in a skewed manner. Skewing maximizes parallelism during data read and write operations, because skewing distributes accesses more evenly across the eight channels.

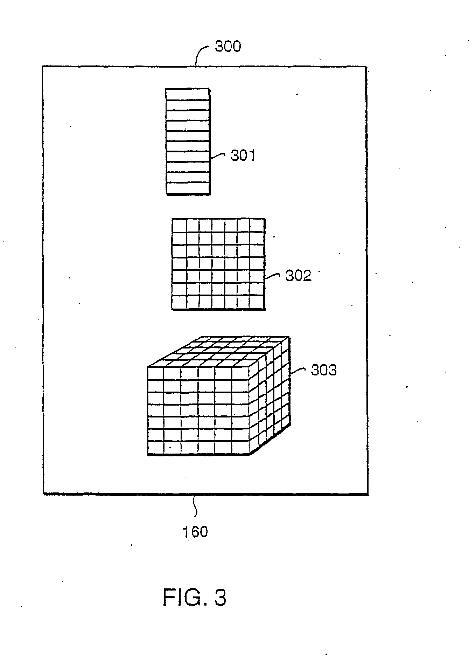

As shown in Figure 3, three different structures are used to store data in the rendering memory 300, depending on whether the data represents a one-dimensional array (tables) 301, a two-dimensional array (pixel and/or depth images) 302, or a three-dimensional array (voxels) 303. The layout of each type of array in the rendering memory depends not only on its dimensionality but also on the size of each array element.

The rendering system uses the following different arrays, each with its own descriptor: arrays for mapping via ports to host memory 12, arrays for direct memory access transfers (DMA), a source array and a destination array for copy operations. Each of these can be an image array, depth array, the volume data set, etc.

There are three aspects of the description or definition of any array: its organization in memory, an interpretation of indices of the array, and a *range* of currently valid elements. These are described in the following sections.

### Definition of Arrays in Memory

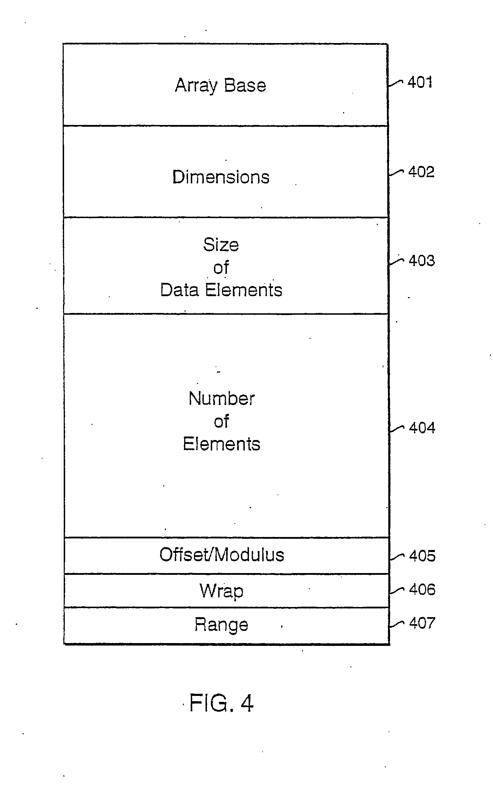

Figure 4 shows some of the data values needed to describe the way an array is stored in the rendering memory 300: a base address of the first element in the array, called the array base 401, the number of dimensions of the array 402, the size of each data element in the array 403, and the number of elements in each dimension 404. The values of Figure 4 can be stored in the registers 122 of the sequencer 130 by software executing in the CPU 11 of the host computer 10. Other values used with arrays, described in greater detail below, include offset/modulus values 405 - one for each dimension 402, a wrap value 406, and range values 407 - two for each dimension 402.

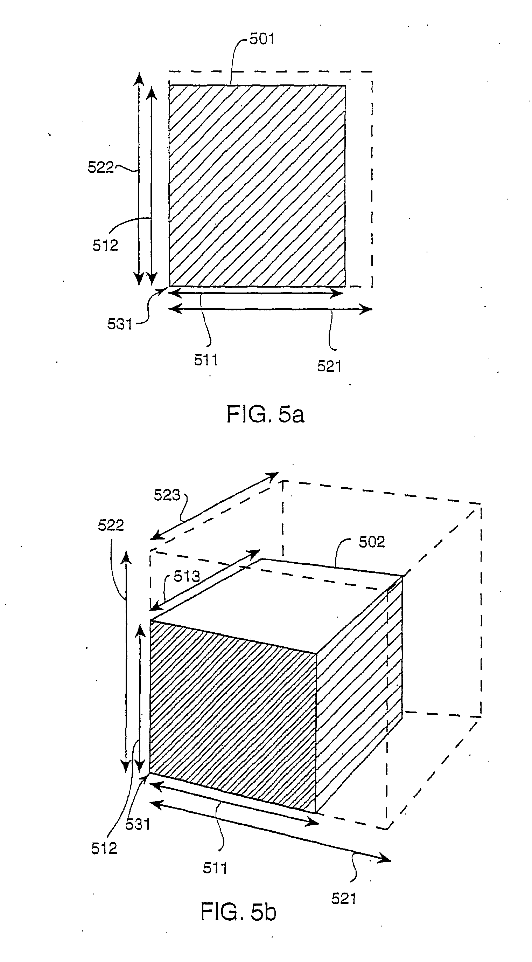

Figure 5a shows a requested and allocated two-dimensional array 501, and Figure 5b shows a requested and allocated three-dimensional array 502. The requested amounts are shown as requestedX 511 and requestedY 512 for a two-dimensional array, as well as requestedZ 513 in the case of a three-dimensional array. The allocated amounts are shown as maxX 521, maxY 522, and maxZ 523. The requested array is a subset of the allocated array because the size of the allocated array is rounded up to avoid crossing byte, word, and page boundaries. The first elements for each array is stored in the rendering memory 300 at array base 531.

The above described array descriptor values for each array can be stored in a set of registers that are part of the rendering registers 122.

### Interpretation of Array Indices

An important advantage of the rendering system according to our invention is its ability to work with very large arrays, while only allocating memory for or manipulating small subsets of the arrays, referred to as *subarrays*. For example, a sub-volume data set may be copied or mapped to the host memory 12 for updating, without requiring that the entire volume data set is copied or mapped. Another example is the case of embedding an image of a small, polygon marker into a large volume which, when rendered, produces a large image. It is very desirable not to have to allocate, load, clear, and maintain large image and depth buffers for the small marker, just to position it correctly in the image of the volume.

For these purposes, as well as others, the system separates the indexing of an array from the allocation and storage of the array in the rendering memory 300. In particular, the system allows allocation and storage of a *subarray* that includes portion of a larger *full array*.

Therefore, each array descriptor 400 also includes the *offset/modulus* 405 value and a *wrap* bit 406. These values are used to modify or convert each array index from an index into the full array, as used by the various parts of the rendering system, into subarray indices of the subarray elements as stored in the rendering memory 300.

### Wrap

There are two different interpretation modes for the offset/modulus value 405, depending upon the wrap bit.

### Offset

When the wrap bit 406 is zero, the offset/modulus value 405 stores an **offset** value for each dimension of the array. Each offset is subtracted from the corresponding array index before accessing the array in the rendering memory 300. This allows a subarray with very large full array index values to be shifted to the address stored in the array base 401.

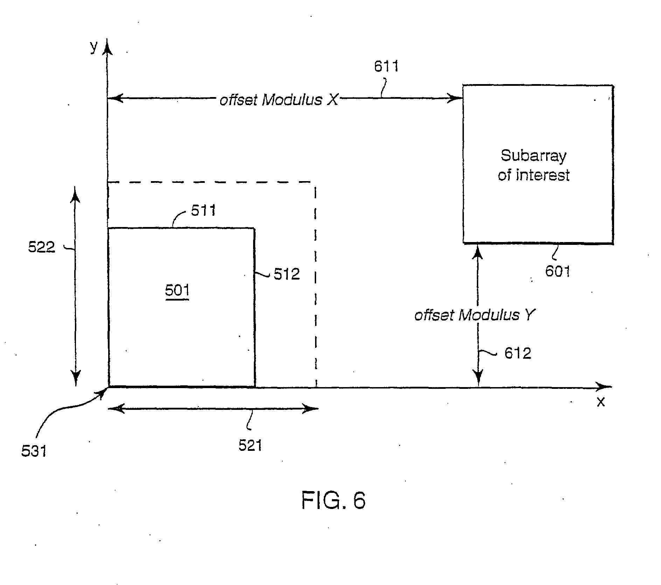

Figure 6 shows the offset for a two-dimensional array. A subarray 601 is a region of interest within a much larger full array that is not shown It is desired to index the subarray 601 with the original full array indices while only allocating enough memory sufficient to store the subarray, rather than the full array. Therefore, an amount of rendering memory (501) large enough to hold the subarray 601 is allocated, and offset/modulusX 611 and offset/modulusY 612 are set to specify the smallest index of the subarray 601 in each of the *x*- and *y*-dimensions.

This effectively translates the full array indices into the subarray 601 to the array base 531 of the offset subarray 501, as allocated. That is, the location of any array element (*x*, *y*, *z*) in the subarray 601 is obtained by converting the full array indices (*x*, *y*, *z*) to subarray indices *(x - offset/modulus.X, y* - *offset/modulus.Y, z - offset/modulus.Z*).

We call (*x*, *y*, *z*) the full array indices of the elements of the subarray 601, and we call the converted indices the subarray indices.

This enables us to index into a relatively small subarray with indices of a much larger full array, while only physically storing the subarray.

### Modulus

If the wrap bit 406 is set to one, then the meaning of offset/modulus 405 is a **modulus** value. This value is used for wrapping the subarray so that becomes a movable window on the full array. This is useful for panning across volumes larger than can be stored in the rendering memory, or images that are larger than the display screen. When we pan, only a small subset of the voxels of the volume data set (or pixels in the image) are in view at any one point in time. As the camera moves, voxels or pixels need to be loaded in the direction of view, and voxels and pixels moving out the field of view need to be discarded.

It is desired to only allocate the bare minimum amount of memory for the voxels and pixels that are in a current view, and it is desired to copy only new voxels and pixels that appear, and not the entire array.

In particular, if a new subarray is specified to overlap a previously stored subarray of the same size, the elements in the intersection of the two subarrays are stored at the same memory locations for both subarrays. The subarray is the part of a larger array that is being viewed at a particular time. When the window is moved across the large array, new voxels (or pixels) are loaded in the direction of movement, replacing the voxels in memory that are out of view. The *wrap = 1* mode is also useful for managing image and depth buffers of large volumes in which rectangular portions are rendered in parallel.

In the preferred embodiment, the size of the subarray is a power of two (2ⁿ) in each dimension. Each offset/modulus register actually stores one less than the size, so that the offset can simply be performed by a bitwise AND operation between offset/modulus value and the full array index value to obtain its subarray index value, instead of having to do computationally expensive divides or successive subtractions. For example, if the modulus value is 2³ and the full array index is thirteen (binary 1101), than 1101 AND 0111 (2³-1) yields 0101 which is five, i.e., 13 **mod** 8 = 5. In general, this is equivalent to converting the full array indices (*x*, *y*, *z*) to the subarray indices *x* **mod** (*offset/modulus.X+1*), *y* **mod** (*offset/modulus.Y+1*), *z* **mod** (*offset/modulus.Z+1*).

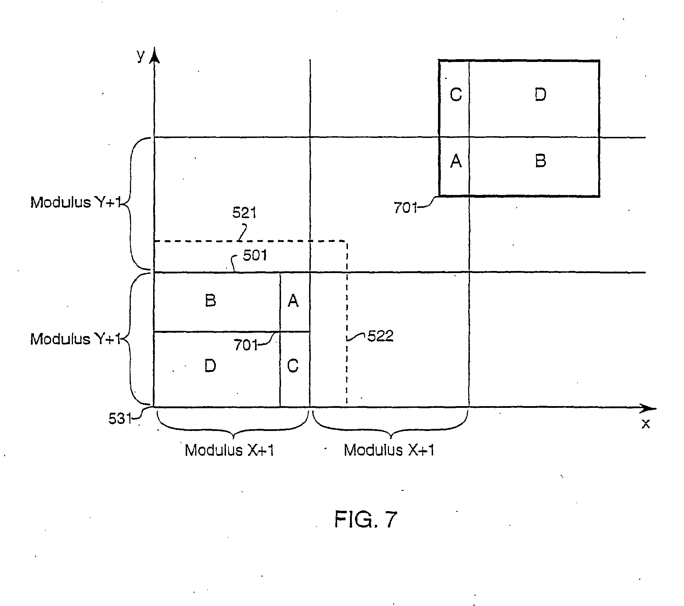

Figure 7 shows the modulus mode, i.e., wrap = 1, for the case of a two-dimensional array. It is understood that this mode can also be used for the three-dimensional array 303. The element of the subarray with the smallest full array indices is (*x*_{*min*}*, y*_{*min*}) 701. This element is repositioned to a point somewhere in the middle of the subarray storage. The point in the subarray is chosen to be at a distance that is an integer multiple of the offset/modulus plus one in each dimension, i.e., *offset/modulus.X+1* and *offset/modulus.Y+1*. The four different quadrants (A,B,C,D) of the subarray 701 map to the same quadrants of the allocated subarray 501. It is readily apparent that the subarray 701 is wrapped about the modulus in each dimension when stored in rendering memory.

Therefore, if the subarray is a window that slides up and to the right, i.e., in increasing *x*- and *y*-directions, then the lower left quadrant of the subarray decreases in size, and the upper right quadrant increases in size. However, as an advantage no data element of the subarray changes physical location in the rendering memory. Thus, time consuming copy operations are avoided.

With the present invention, *all* indices into arrays that are used in the rendering system can be full array indices. The subarray indices are totally transparent to the hardware and software. The subarray indices are determined and used only by the memory interface 110.

For example, if an array is mapped to the host memory 12 and a region of interest is transferred to rendering memory 300 via a DMA operation, the valid range of the subarray appears to software as an ordinary array of its dimensionality stored in row-major order. It can be accessed as if the full array had been transferred, provided that accesses are restricted to the subarray range.

### Ranges

The third aspect of the description of an array is its range 407. The range values specify the lower and upper bounds of valid index values in each dimension. In some cases, the range is the same as the subarray bounds, but in other cases it can be more restrictive.

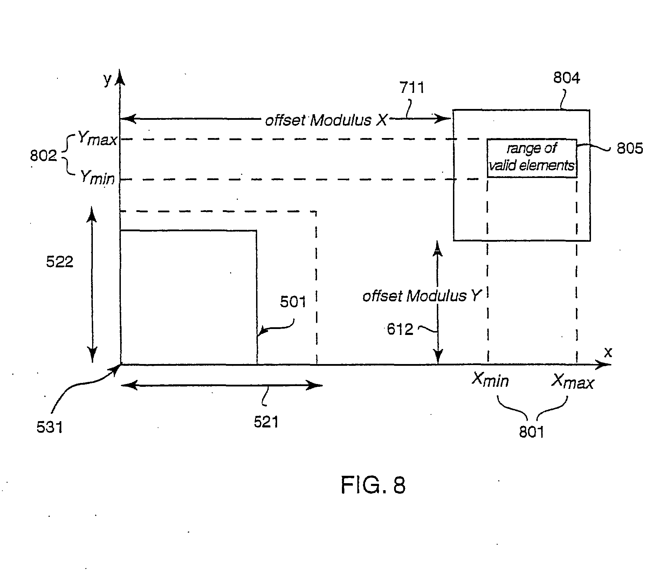

Figure 8 shows a range of a two-dimensional array. The range of valid elements 805 of the subarray 804 is bounded by range indices *x*_{*min*} and *x*_{*max*} 801 in the *x*-direction, and *y*_{*min*} and *y*_{*max*} 802 in the *y*-direction. The rendering system does not read or write elements outside the range of an array. More specifically, if the array defines a volume data set, and if voxels outside of the range are needed, these voxels are synthesized, for example, from nearby voxels within the range, or assigned a fixed value, for example, zero for voxels outside the object being rendered. Voxels outside the range are never read from the rendering memory.

Ranges are useful when an image of a small, polygon marker is embedded in a large volume. Ranges allow the color, opacity, and depth of the polygon marker to be rendered only within the bounding box of the marker. Our invention allows reads outside that range to return an opacity of zero and a depth that is at the far limit, for example. Thus, no data need to be rendered or copied to the rendering memory outside the bounding box of the polygon marker, which saves both computational time and memory bandwidth.

Although the invention has been described by way of examples of preferred embodiments, it is to be understood that various other adaptations and modifications can be made within the spirit and scope of the invention. Therefore, it is the object of the appended claims to cover all such variations and modifications as come within the true spirit and scope of the invention.

## Claims

1. A system for rendering a volume data set, comprising:
a plurality of parallel rendering pipelines;
a rendering memory, coupled to the plurality of rendering pipelines, operative to store one-, two-, and three-dimensional arrays, each array having a plurality of elements;
a means for storing an array description for each array, the array description including a base address of the array, a number of dimensions of the array, a size of each element of the array, a number of the elements in each dimension of the array, offset/modulus values of the array;
means for selecting a wrap mode;
means for selecting values; and
a memory interface, coupled to the rendering memory and the plurality of rendering pipelines for accessing the elements of each array according to the corresponding array description.

2. The system of claim 1 wherein each array is stored at memory locations having subarray indices, and the memory interface accesses the array using only full array indices, and the memory interface converts the full array indices into the subarray indices using the array description.

3. The system of claim 2 wherein the wrap mode is disabled, and the offset/modulus values are offset values that are subtracted from the full array indices to determine the subarray indices.

4. The system of claim 2 wherein the wrap mode is enabled, and the offset modulus values are modulus values that are ANDed with the full array indices to determine the subarray indices.

5. The system of claim 4 wherein the modulus values are expressed as a power of two number minus 1.

6. The system of claim 1 wherein each dimension of each array includes a minimum and maximum valid index.

7. The system of claim 1 wherein elements with indices outside the range values are synthesized.

8. The system of claim 1 wherein elements with indices outside the range values are assigned fixed values.

9. The system of claim 1 wherein a particular two-dimensional array stores pixel values and a particular three-dimensional array stores voxel values.

10. A method for rendering a volume data set, comprising:
storing one-, two-, and three-dimensional arrays in a rendering memory coupled to a plurality of rendering pipelines, each array having a plurality of elements;
an array description for each array, the array description including a base address of the array, a number of dimensions of the array, a size of each element of the array, a number of the elements in each dimension of the array, offset/modulus values of the array;
selecting a wrap mode;
selecting a range of valid indices for accessing the array; and
accessing elements of each array according to the corresponding array description.

11. The method of claim 10 further comprising:
converting full array indices of each array to subarray indices using the array description.

12. An integrated circuit for accessing and rendering a volume data set as an image, wherein the volume data set is stored as a three-dimensional array in a rendering memory and the image is stored as a two-dimensional array in the rendering memory, comprising:
a plurality of parallel rendering pipelines; and
a memory interface, coupled to the plurality of pipelines and the rendering memory, the memory interface receiving only full array indices and converting the full array indices to subarray indices of the rendering memory to access and render the volume data set.

13. The integrated circuit of claim 12 further comprising:
a set of registers for each array to control the full array indices to the subarray indices.

14. A memory interface for accessing data stored in a memory as arrays, the data distributed across the memory in a skewed manner:
means for receiving full array indices of the arrays;
means for converting the full array indices to subarray indices of the arrays; and
accessing the data by the subarray indices.

15. The memory interface of claim 15 wherein the means for converting maps full array indices to skewed subarray addresses of the arrays to make the skewed subarray indices transparent to hardware and software and to maximizes parallelism during data read and write accesses to the data.

16. The memory interface of claim 14 wherein the means for converting further comprises:
means for subtracting an offset value from the full array indices to determine the subarray indices.

17. The memory interface of claim 14 wherein the means for converting further comprises:
means for ANDing a modulus value with the full array indices to determine the subarray indices.

18. The memory interface of claim 17 wherein a size of each dimension of each array is a power of two, and the modulus value is power of two minus one.

19. The memory interface of claim 18 wherein each dimension of each array includes a minimum valid index and a maximum valid index.

20. The memory interface of claim 14 wherein the data are graphics data stored in one, two, and three dimensional arrays.

21. A method for accessing data stored in a memory of arrays, the data distributed across the memory in a skewed manner:
receiving full array indices of the arrays;
converting the full array indices to subarray indices of the arrays; and
accessing the data by the subarray indices.

22. The method of claim 21 wherein the converting maps. full array indices to skewed subarray addresses of the arrays to make the skewed subarray indices transparent to hardware and software and to maximizes parallelism during data read and write accesses to the data.
